# EUROPEAN PATENT APPLICATION

(11) **EP 4 349 510 A1**
(43) Date of publication of application: **10.04.2024**
(21) Application number: 22200021.8
(22) Date of filing: 06.10.2022
(51) Int. Cl.: B22F 10/80, B29C 64/386, B33Y 50/00, G06F 16/901, G06F 17/40, B22F 10/14, B22F 10/28, B23K 26/342, G06F 113/10

(54) **ADDITIVE MANUFACTURING TECHNIQUES**

(71) Applicant: Siemens Aktiengesellschaft, 80333 München (DE)
(72) Inventor: Dallmann, Michael, 90530 Wendelstein (DE); Kamps, Tobias, 80538 München (DE); Krüger, Daniel, 91154 Roth (DE); Regulin, Daniel, 82269 Geltendorf (DE); Reisch, Raven Thomas, 81379 München (DE)
(74) Representative: Siemens Patent Attorneys

(57) **Abstract**

A, preferably computer-implemented, method of assisting, operating, monitoring, and/or controlling an additive manufacturing process, the method comprising the steps of: obtaining operational data (OD) captured during the additive manufacturing process, assigning the operational data (OD) to nodes (63) in a first layer (L3) of a hierarchical tree structure (60), aggregating the operational data (OD) of the nodes (63) in the first layer into aggregated data (AD), and assigning the aggregated data (AD) to nodes (62) of a second layer (L2) of the hierarchical tree structure (60), wherein the second layer (62) is above the first layer (63) in the hierarchical tree structure (60).

## Description

### TECHNICAL FIELD

The present disclosure relates to additive manufacturing.

### BACKGROUND

In additive manufacturing like Laser-based Powder-based Fusion (Lb-PBF), Wire Arc Additive Manufacturing (WAAM) or Binder Jetting (BJ), different types of defects such as porosity, slag inclusions/foreign inclusions, lack of fusion/delamination, incomplete penetration, cracks, undercutting, sputter, burnthrough/keyholes/heat accumulations, geometry/shape deviations, distortion, tool wear and balling may occur. These defects lower the quality of the object and thus, the object may be scrapped. Production scrap results in high costs, especially if the defect is noticed only after the part is finished which can take up to several days. In addition, post-process quality assurance is cost-intensive and cannot be applied for large-scale objects.

### SUMMARY

If a defect is already monitored during an additive manufacturing process, the process can be stopped, and/or compensation strategies can be applied. Thus, the need for an in-situ monitoring is evident to lower the cost of the production, to increase the object quality and/or to decrease production scrap. Thus, a suitable process monitoring system is necessary. This holds several challenges. An additive manufacturing process, e.g., carried out by an additive manufacturing system, e.g., comprising a plurality of sensors, may have a long processing time which may lead to a large amount of operational data being accumulated and/or an extensive size of one or more data files comprising the operational data. Hence, gathering and/or archiving operational data is cumbersome and/or demands high effort for data filtering, data aggregation, as well as data storage. Furthermore, there is a need for remotely accessing the operational data, e.g., by operating personnel, like a quality engineer and/or machine operator. This requires live and/or online monitoring of operational data, in particular quality data. Still further, the operational data needs to be aligned with respect to time and/or position in the object.

It is thus an object to resolve these challenges and improve the provisioning of operational data in an additive manufacturing process.

The object is achieved by the independent claims. Advantageous embodiments are provided in the dependent claims.

### BRIED DESCRIPTION OF THE DRAWINGS

- Figure 1: shows an additive manufacturing system for producing an object.
- Figure 2: shows an additive manufacturing system for assisting, operating, monitoring, and/or controlling an additive manufacturing process.
- Figure 3: shows a schema for processing of operational data in a backend and a visualization of the operational data in the frontend of an additive manufacturing system.
- Figure 4: shows operational data acquired during an additive manufacturing process.
- Figure 5: shows a recursive subdivision of a cubic space into cubic subspaces.
- Figure 6: shows a hierarchical tree structure in the form of an octree representing a cubic space and its subspaces.
- Figure 7: shows an octree and operational data which is associated to nodes of the octree.
- Figures 8 and 9: show schemes for processing of operational data for different additive manufacturing processes.
- Figure 10: shows a visualization of aggregated data of nodes of a first layer of an octree.
- Figure 11: shows a visualization of aggregated data of nodes of a second layer of an octree.
- Figure 12: shows a visualization of aggregated data of nodes an octree and a superimposed visualization of a data model of an object.
- Figure 13: shows a sequence of visualizations of aggregated data.
- Figure 13a and Figure 13b: show a first and a second octree, respectively.
- Figure 14: shows a defect in an object during an additive manufacturing process.
- Figure 15: shows a visualization of a defect.
- Figure 15a and 15b: show the creation of quality indicators based on measurement data from different sensors.
- Figure 16 to 31: show exemplary method steps of an additive manufacturing process.

### DETAILED DESCRIPTION

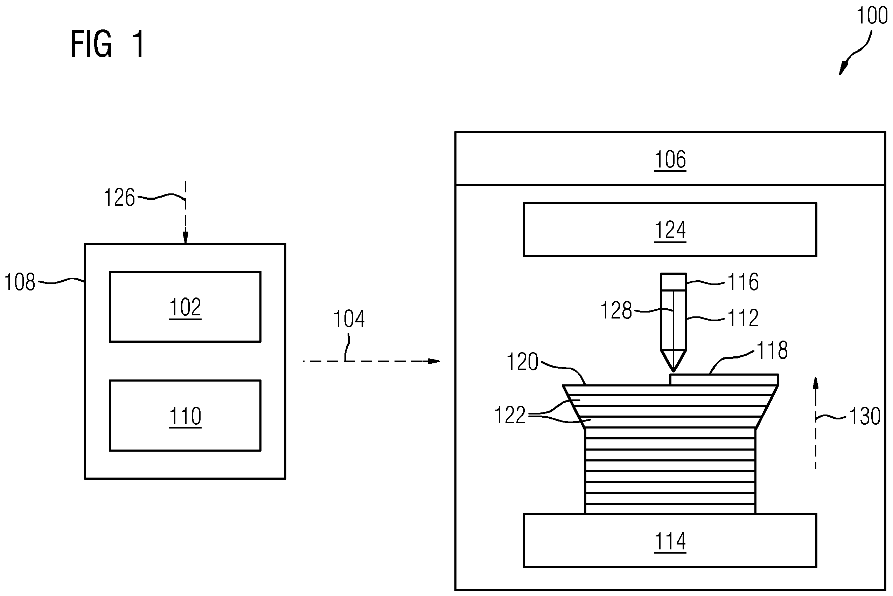

Figure 1 shows an additive manufacturing system. Examples of additive manufacturing processes include fused deposition modeling, fused filament fabrication, robocasting, electron beam freeform fabrication, direct metal laser sintering, electron-beam melting, selective laser melting, selective heat sintering, selective laser sintering, and stereolithography. Many of these processes involve depositing and melting/softening/bonding materials in selective locations layer by layer to build up a desired object. A non-exhaustive list of example materials that may be used in additive manufacturing includes metals, thermoplastics and ceramics.

Additive manufacturing processes typically employ additive manufacturing machines configured to carry out their respective processes, e.g., comprising a tool or deposition head following a toolpath. However, it should be appreciated that some additive manufacturing machines may further be capable of machining/subtractive processes as well and correspond to hybrid additive/subtractive machines.

The additive manufacturing system 100 may include at least one processor 102 operatively configured to generate instructions 104 usable by an additive manufacturing machine 106 to control the operation of the additive manufacturing machine in order to build an object via at least additive manufacturing. In an example embodiment, one or more data processing systems 108 may include the at least one processor 102. For example, an external data processing system may correspond to a workstation having various software components (e.g., programs, modules, applications) 110. The software components 110 may be operatively configured to cause the at least one processor 102 to carry out the functions and acts to implement the instructions 104. In an example embodiment, the instructions 104 may have a G-code format or other numerical control (NC) programming language format. Examples of G-code formats include formats confirming to standards such as RS-274-D, ISO 6983, and DIN 66025.

The additive manufacturing machine 106 may comprise a deposition head 112 and a build plate 114. The deposition head 112 may include an integrated heat source 116 such as a laser (or electrode) that is operative to melt/soften material 118 such as powdered metal (or metal wire) that is provided from the deposition head. The additive manufacturing machine 106 is operative to build an object 120 up from the build plate 114 via depositing layer on top of layer 122 of material 118 in a build direction 130. The deposition head 112 in this example may be operative to simultaneously output and melt/soften a continuous flow of material that bonds to the build plate and/or previously applied layers that make up the object. In this described example the material may correspond to metal (in a powder or wire form). However, it should be appreciated that in alternative embodiments, the additive manufacturing machine is operative to deposit other types of material such as thermoplastics.

The additive manufacturing machine may be operative to move the deposition head horizontally (in X-Y directions) and vertically (in Z directions). The additive manufacturing machine may also be operative to move the build plate (such as by rotating the build plate with respect to one or more different axes). The additive manufacturing machine may be operable to move the print head and/or the build plate relative to each other to deposit beads of material in patterns that build up the object or a portion of the object in layers. The additive manufacturing machine may include a controller 124 that is operatively configured to actuate the hardware components (e.g., motors, electrical circuits and other components) of the additive manufacturing machine in order to selectively move the deposition head and/or the build plate in order to deposit material in the various patterns. Such a controller 124 may include at least one processor that is operative responsive to software and/or firmware stored in the additive manufacturing machine to control the hardware components of the additive manufacturing machine (e.g., the deposition head and heat source). Such a controller may be operative to directly control the hardware of the additive manufacturing machine by reading and interpreting the generated instructions 104. In an example embodiment, such instructions may be provided to or acquired by the controller over a network connection. In such examples, the controller 124 may include a wired or wireless network interface component operative to receive the instructions. Such instructions 104 may come directly from the data processing system 108 over the network. However, in other examples, the instructions 104 may be saved by the data processing system on an intermediate storage location (such as a file server) which is accessible to the additive manufacturing machine.

The software 110 is operative to receive a (3D) model 126 of the object and generate the instructions 104 based on the (3D) model 126 of the object. In an example, the software may include a CAM software component that facilitates the generation of the instructions 104 from a (3D) model. Such a (3D) model for example may correspond to a CAD file in a format such as STEP or IGES. In an example embodiment, the software components 110 may include a CAD/CAM/CAE software suite of applications such as NX that is available from Siemens.

In addition to generating G-Code for a (3D) model, an example CAM software component may also be configured to cause the data processing system to output a visual representation of the object 120 on a display, which is operatively connected with the processor, based on the (3D) model. In addition, the CAM component may be configured to cause the data processing system to provide a graphical user interface for use with providing inputs from an input device of parameters usable to generate the instructions 104 for building the object. Such user provided parameters may include the build direction(s) to be associated with the object (or various portions of the object), the thickness and width of each bead of deposited material, the speed that the material is deposited, the patterns that the head travels relative to the build plate to deposit material to the object, as well any other parameters that define characteristics for the operation of an additive manufacturing machine.

Defects may occur during the additive manufacturing process. To detect these defects, a machine operator is in charge of process surveillance of the machine during the whole process. The operator monitors the operational data, such as process data and/or parameters, such as, e.g., Laser power, current or voltage. In additive manufacturing machines, a video stream of a camera can be used to monitor the process visually. However, the monitoring is done manually based on the operators' experience. If the operator detects a defect, the machine can be stopped. However, many high-frequency patterns in the data cannot be monitored by a human person and often, the concentration of the machine user disappears after a while. In addition, extraordinary experience is needed to detect the defects. As a result, many defects cannot be detected in situ and a quality assurance step after the manufacturing process must be added. Current systems often show offline data after the process has finished due to the large size of the data acquired. Other solutions may offer an online system with some degree of data aggregation, which is, however, highly specialized for each processing technology and sensor class. A complete monitoring system for in-situ part quality monitoring, i.e., during the additive manufacturing process, is not implemented until now.

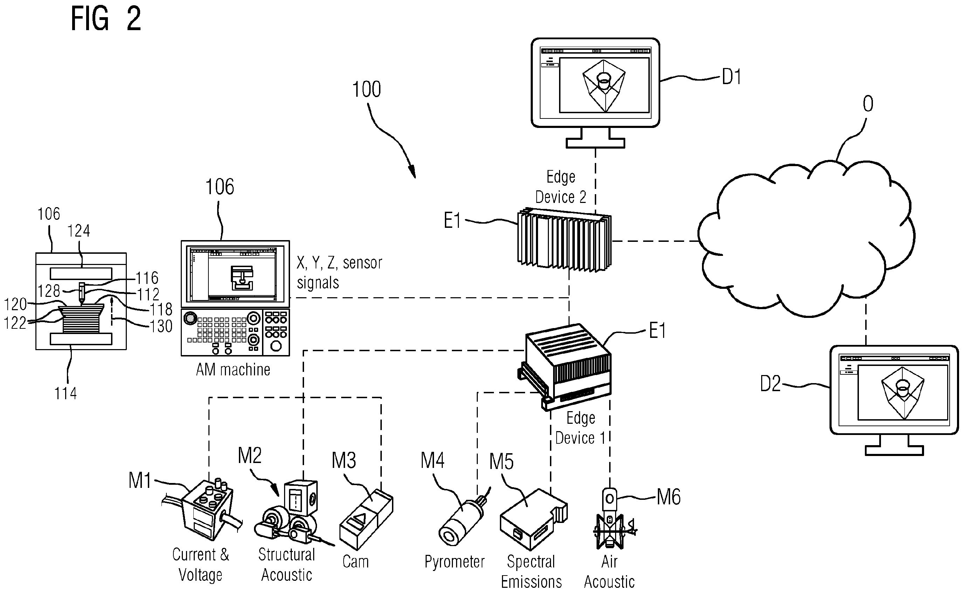

Now turning to Figure 2 which shows an additive manufacturing system 100 for assisting, operating, monitoring, and/or controlling an additive manufacturing process. The system comprises an additive manufacturing machine 106 and a first and a second edge device E1, E2. The edge device E1, E2 may be a device for data processing and may, to that end, comprise one or more processor which may execute instructions according to one or more software programs stored on the edge device E1, E2. The system may further comprise sensors M1,..., M6 for monitoring the additive manufacturing process. The one or more sensors M1,..., M6 may capture one or more physical properties relating to the additive manufacturing process of the object. The one or more sensors may provide measurement data relating to the one or more physical properties captured. Various measurement techniques, e.g., visual, ultrasonics, liquid penetrant, magnetic particles, eddy current, radiography, and/or others as applicable, may be used. As shown in Figure 2 current sensor, acoustic sensor, a camera, a pyrometer, a spectral emission sensor and/or an acoustic sensor may be used to monitor the additive manufacturing process. The sensors may be communicatively coupled to the first edge device E1. Each sensor may provide its measurement data to the first edge device E1, e.g., via a network, such as a data bus. The first edge device E1 may also be communicatively coupled to the additive manufacturing machine 106, e.g., a controller of the additive manufacturing machine. Furthermore, the additive manufacturing machine 106 and/or the first edge device E1 may be communicatively coupled to the second edge device E2. The first edge device E1 may serve for processing the measurement data obtained from the one or more sensors and/or for processing a timestamp and/or a spatial position obtained from the additive manufacturing machine 106. The second edge device E2 may comprise and/or be communicatively coupled to a display D for displaying the measurement data and/or the timestamp and/or the spatial position on the display D. As described herein, the display D may also serve for displaying a visualization of operational data and/or aggregated data. The second edge device E2 may also be communicatively coupled to a remote computing platform O, e.g., a cloud computing platform. A second display D2 communicatively connected to the remote computing platform may also serve for displaying (a visualization of) the operational data and/or aggregated data located in the cloud. Operational data may comprise measurement data and/or may additionally comprise one or more timestamps and/or spatial positions. Thus, the measurement data may be enhanced with temporal and/or spatial data. Based on the temporal and/or spatial data the measurement data may then be indexed as described herein and may be organized in a data structure in the form of a hierarchical tree, such as an octree. The operational data may further comprise one or more quality indicators and/or anomaly scores relating to the measurement data.

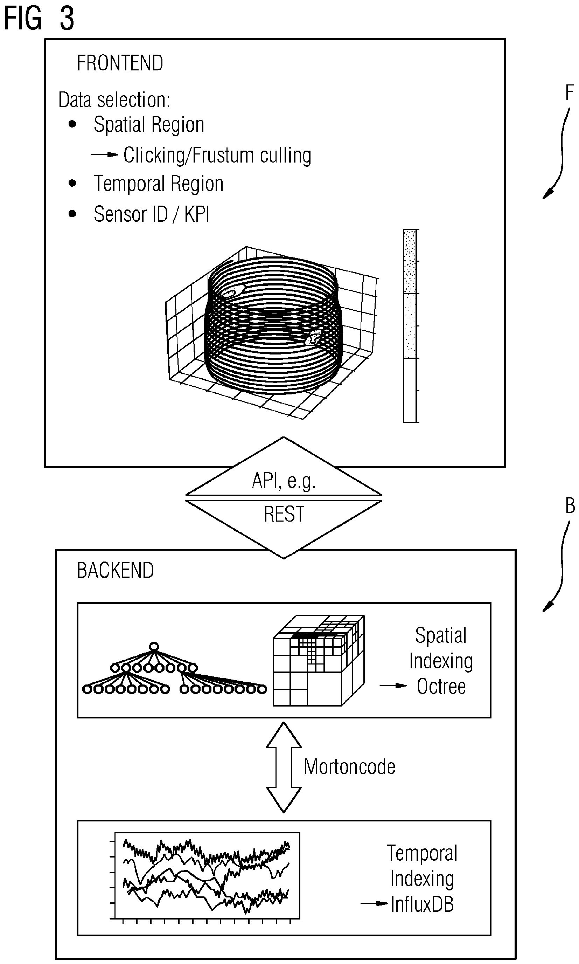

Figure 3 shows a scheme for processing of operational data in a backend B and a visualization of the operational data in the frontend F of an additive manufacturing system. The backend B may comprise the first edge device which obtains the measurement data and assigns the operational data to (leaf) nodes of a hierarchical tree structure. The first edge device may also aggregate the operational data and assign the aggregated operational data to nodes of a second layer of the hierarchical tree structure. To that end, the first edge device may index the measurement data in accordance with timestamps and/or spatial positions obtained from the additive manufacturing machine. To that end, a Morton code of the measurement data may be used. For example, a vector comprising the measurement data of the one or more sensors may be formed. A component of the vector may represent the measurement data of one of the sensors at a particular time and/or space.

The frontend F may comprise a second edge device that may be communicatively coupled to the first edge device using one or more application programming interfaces, APIs, e.g., RESTful APIs. Hence, the second edge device may serve for selecting operational data corresponding to a spatial region, a temporal region, and/or a sensor from the plurality of sensors. Thus, the second edge device may receive upon selection and/or transmission of an indication, data, such as measurement data, operational data and/or aggregated data, as described herein, from the first edge device. The operational data and/or the aggregated data obtained by the second edge device may then serve as the basis of a visualization. As the case may be, the second edge device and/or the display coupled to the second edge device may possess a certain storage capability and/or a certain display capability. Thus, the amount of data that can be stored on and/or visualized via the second edge device may depend on the capabilities of the second edge device and/or the display.

Thus, for the task of process monitoring and/or detecting anomalies during an additive anomaly process (in real time), an edge computing approach is utilized. The system may include two types of edge devices, exemplary represented by the first and the second edge device in Figure 2, respectively. An arbitrary number of the first type is used for processing and/or monitoring the received measurement data with the help of machine learning techniques in a compute cluster and may include GPUs for accelerating anomaly detection operations. The second type may be used for visualization and/or for connecting the additive manufacturing system with a cloud computing platform for process monitoring and/or visualization.

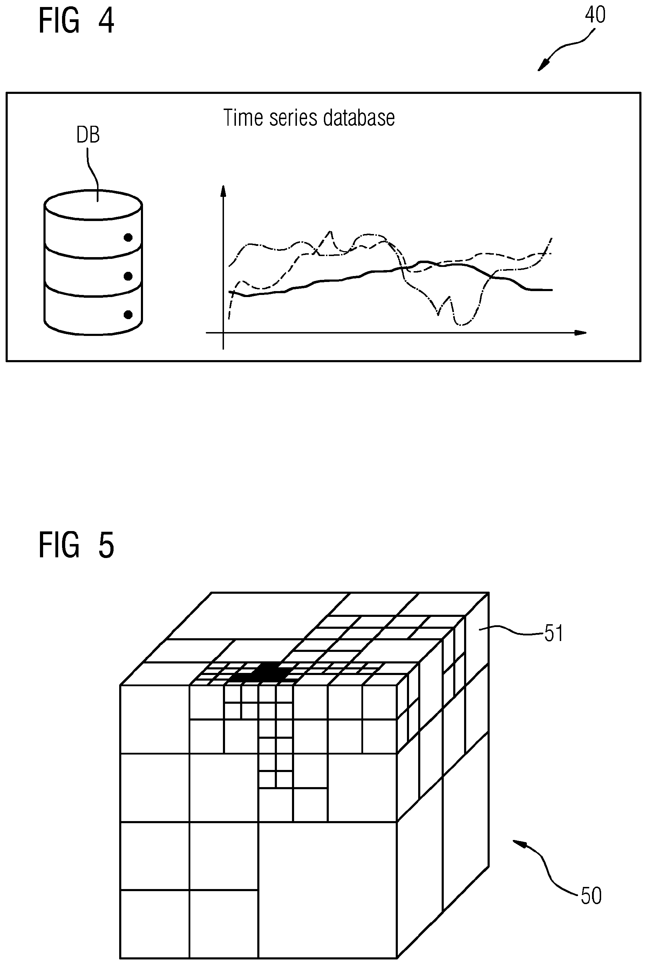

Figure 4 shows measurement data 40 acquired during an additive manufacturing process. The measurement data 40 may be raw data that is obtained from each of the sensors. The measurement data may be stored as a time series in a database. This database may part of the first edge device. During the additive manufacturing process a large amount of data is generated which thus requires corresponding amount of memory to be stored. In order to retrieve this data and/or to visualize the data efficient data management is required.

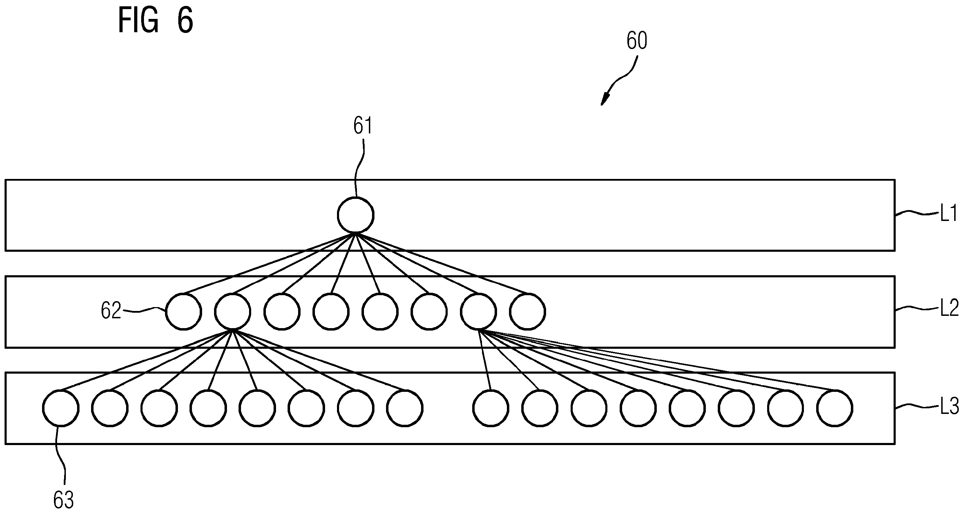

Figure 5 shows a recursive subdivision of a cubic space 50 into cubic subspaces 51, whereas Figure 6 shows a hierarchical tree structure 60 in the form of an octree representing the cubic space 50 and its subspaces 51. The cubic space and its subspaces in Figure 5 are equivalent to the tree representation in Figure 6. The cubic space represents the measurement, operational data and/or aggregated data, as the case may be.

By way of the hierarchical tree structure 60, e.g., in the form of an octree, data aggregation may be performed. Octrees or a stacking of quadtrees may be used for data aggregation, i.e., for combining the measurement data captured, e.g., in the form of time series, with their position in the object. An octree is a hierarchical tree structure 6 in which each internal node has (exactly) eight children. An octree may thus be used to partition a three-dimensional space by recursively subdividing it into eight octants as shown in Figure 5. Octrees are the three-dimensional analog of quadtrees. Using an octree to organize and/or store the measurement data, e.g., for the visualization, offers the possibility to reduce data being shown to the user without the need of additionally aggregating, filtering, deleting the measurement data. An interface between a first and a second edge device may be used for transmitting the data required for visualization. If needed, the octree may be used for data aggregation, e.g., for quality reports.

The root node 61 or root octant that spans the entire cubic space, or domain, is located at layer 0 of the tree. Each child node 62 or child octant of the cubic space is one layer higher in the tree structure than its parent. The smallest octant or leaf nodes 63 may correspond to measurement data or raw data form a sensor. The layers L2 in between the root node L2 and the smallest node L3 or leaf may correspond to aggregated data. Thereby different degrees of data aggregation are obtained. The different degrees of data aggregation may be obtained by the different layers L1, L2, L3 of the hierarchical tree structure, in this case an octree.

The use of a hierarchical tree structure 60 thus enables the storage and/or visualization of high frequency data, such as measurement data from the one or more sensors, in particular in case of lot of large amounts of measurement data, e.g., as present in LB-PBF, and in particular data frequencies of above 100 kHz.

An interface, such as the API shown in Figure 3, may be used for displaying the operational data also remotely with low latency without losing the detailed information of the raw data. A spatial and/or temporal region of interest may be assessed if needed by zooming in or filtering the visualization. Hereby, spatial and/or temporal regions can be viewed. A region can be defined as one or more toolpaths of a tool, e.g., deposition head, of the additive manufacturing machine. The toolpath may comprise information from external or internal data sources. Internal data sources may comprise monitoring data (processed sensor data), which show, e.g., anomalous behavior. External data sources may comprise simulation data, where critical areas in the object have been identified, or CAM/CAD data, by which objects in the same additive manufacturing process are separated or by which specific requirements, e.g., an object's stability and/or the surface roughness are defined.

As described herein, a software application, running on the first edge device, e.g., of type 1, fulfills the task of collecting, storing, and analyzing the received information of the additive manufacturing process, for example at low latencies. The first edge device may be connected to the additive manufacturing machine and the one or more sensors, e.g., via ethernet. Data from the additive manufacturing machine and from sensors may be received by the first edge device, e.g., via the IP protocol.

The proposed additive manufacturing system thus enables a scalable, and preferably portable and/or containerized, microservices, executed on any number of edge device of type 1, continuously receiving a data stream of measurement data and process parameters from the described sensors and the additive manufacturing machine. The software application(s) may be implemented as microservices which may be encapsulated with the help of container virtualization on top of an operating systems, enabling scalability, portability and/or hardware abstraction. Inter-service communication may be enabled with the help of a central data bus. The received measurement data and additive manufacturing information may be published via the data bus and/or received from other subscribing microservices on another edge device. Furthermore, microservices for receiving measurement data, analyzing the measurement data, monitoring the additive manufacturing process, and storing the measurement data may be utilized.

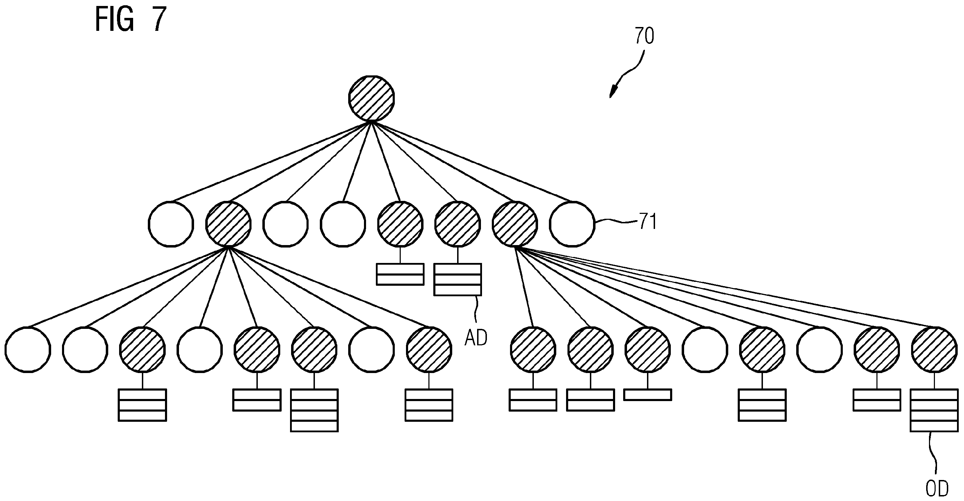

In order to reduce the memory usage, e.g., on the edge device, the octree can be additionally connected to a database DB, e.g., a time series database, such as InfluxDB, where the measurement data is saved. Such an embodiment is shown in Figure 7. Figure 7 shows an octree 70 and operational data OD, as well as aggregated data AD which are associated to nodes 71 of the octree. Via locational codes, such as the Morton Code, which may be saved, preferably simultaneously, in a database, the octree locations may be mapped to the timestamps. For fast access, the most relevant sensor signals can be saved as cache in a memory, e.g., the RAM as a hashmap, of the edge device. If a user chooses a specific sensor or sensor combination, for example comprising sensor values and an aggregation method, such as a toolpath energy given by the voltage, current and welding speed, the data can be either loaded from the database or the cached data. Hence, different levels of detail may be obtained for a region of interest, wherein the level of detail may be obtained by querying a layer of the octree. The solution thus offers a general and scalable approach for in-process monitoring of an additive manufacturing process.

The additive manufacturing system, including sensors and edge devices, may thus be used in additive manufacturing (processes) for in-situ assisting, operating, monitoring, and/or controlling an additive manufacturing process. The octree-based architecture and its capabilities allow for a remote visualization of a large amount of data points on a display. Additional benefits comprise the scalability and flexibility in the multivariate sensor framework.

An octree provides a mechanism for aggregating similar regions of spatial data, which can save both space and time. Many basic operations, such as neighbor finding, are implemented in terms of operations on trees such as tree traversal. The octree and its octants may be represented as a sorted sequence. An octree may thus aggregate numerous small volumes of space into a single larger representative volume. The octree provides a spatial representation of discrete point cloud with semantically enhanced data.

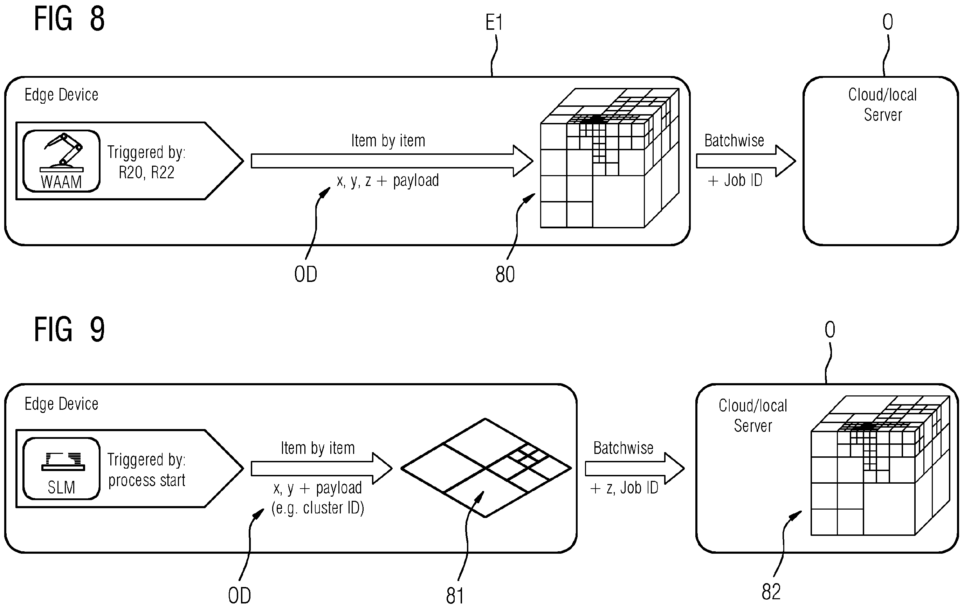

Figures 8 and 9 show schemes for processing of operational data OD for different additive manufacturing processes. For each object to be build an octree 80 may be initialized based on machine context. Hence, each new object to be built may be associated with a new octree. As shown in Figure 8 and 9 the data processing may be organized in different manners. For example, in case of a WAAM additive manufacturing process/system/machine as shown in Figure 8, the octree may be populated incrementally. The machine context may be provided from the additive manufacturing machine. Binary values indicating the start and stop of the overall manufacturing program R20, the start and stop command R21 for the WAAM process, as well as the real start and stop R22 of the WAAM process may be used. Based on the machine context, the octree 80 may be instantiated, preferably on an edge device E1, and the measurement data may be entered in the octree incrementally.

Similarly, in the case of a SLM additive manufacturing process, as shown in Figure 9, the process start may serve as a trigger for instantiating the octree 80, e.g., on said edge device.

Data items comprising spatial position, may be obtained, e.g., by the edge device, from the additive manufacturing machine. The spatial position x, y, z may be coordinates of a coordinate system such as a cartesian coordinate system. The data items may also comprise payload data. The payload data may comprise measurement data from the additive manufacturing machine and/or from additional sensors.

For the WAAM additive manufacturing process all coordinate data may be used to populate the octree, whereas for example in case of the SLM additive manufacturing process the octree may be populated by first determining a quadtree 81 and stacking the quadtrees 81 in order to obtain an octree 82.

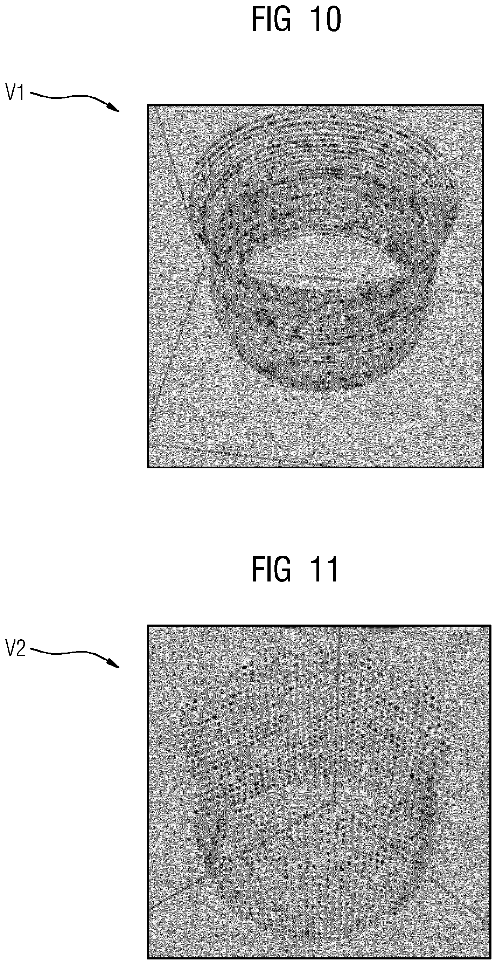

Figure 10 shows a visualization V1 of operational data of nodes of a first layer of an octree. The first layer of the octree may comprise the measurement data as obtained by the edge device from the one or more sensors. A quality indicator or anomaly score may be determined and assigned to the measurement data and/or the nodes of the octree. The quality indicator and/or anomaly score may then be visualized as shown in Figure 10. A color-based representation of the quality indicator and/or anomaly score may be used for the visualization. The visualization V1 as shown in Figure 10 may correspond to the lowest layer of the octree, i.e., comprising the original measurement data or raw data.

Figure 11 shows a visualization V2 of aggregated data of nodes of a second layer of an octree. As shown, (the visualization of) the second layer comprises a fewer number of nodes than the first layer and is hierarchically, e.g., directly, above said first layer. The nodes of the first layer and their respective operational data have been combined, i.e., aggregated, to form new values which are assigned to the respective nodes of the second layer. To that end, one or more statistical properties of the operational data of the first layer have been determined and the resulting data, i.e., the aggregated data, has been assigned to the nodes of the second layer.

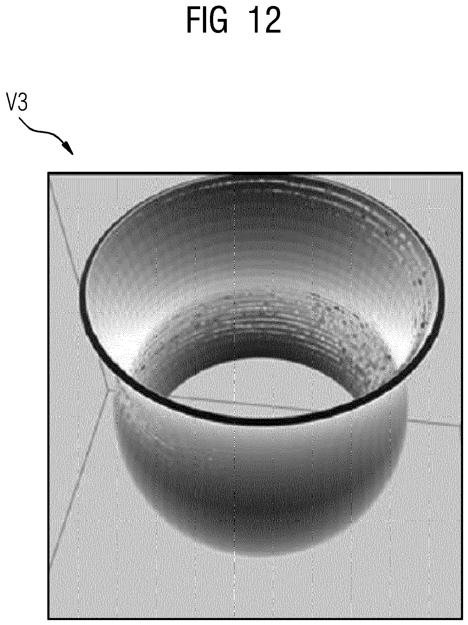

Figure 12 shows a visualization V3 of aggregated data of nodes an octree and, superimposed, of a data model of an object. Thus, different degrees of data aggregation (via an octree) may be obtained and a visual comparison with the initial CAD-file, i.e., (3D) model, of the object may be obtained.

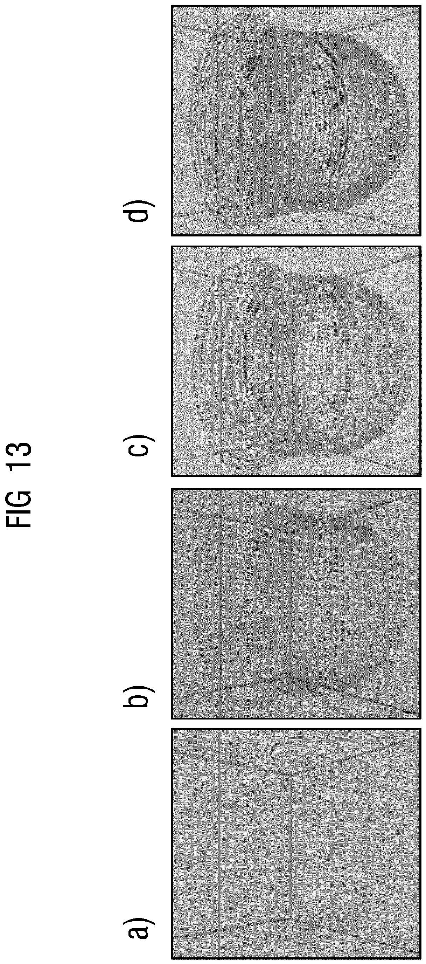

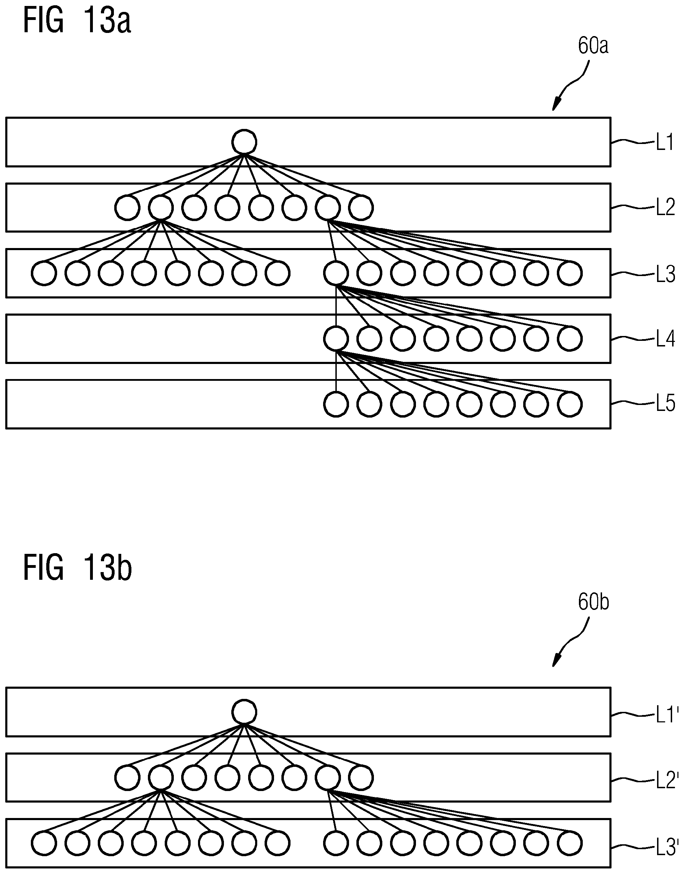

Figure 13 shows a sequence of visualizations a), b), c), d) of aggregated data. The visualization may depend on one or more properties of the display. The visualization may depend on a degree of refinement necessary for monitoring the additive manufacturing process in order to assist the user to detect defects in the additive manufacturing process. The resolution of the visualization may thus be changed between the different views, as shown in the sequence of views in Figure 13 a)-d). An indication may serve for retrieving the necessary aggregated data. A user may thus zoom in on or zoom out of a region of interest. The views may be based on different layers of the octree. In the view of Figure 13 a) a high layer of the octree is obtained and the aggregated data of that layer is visualized, where in the view of Figure b), c) and d) the resolution is increased by retrieving aggregated data from lower layers of the octree.

Figure 13a and Figure 13b show a first octree 60a and a second octree 60b, respectively. The first octree, as shown in Figure 13a, may be created on a device for data processing, i.e., first edge device or edge device of a first type. Thus, the first octree may be located on the first device for data processing. The first edge device may comprise a plurality of layers L1, ..., L5. Therein, the lowest layer may be associated with the raw sensor data. The intermediate layers may comprise aggregated data, wherein the degree or detail of aggregation depends on the position of the layer within the octree. the lowest layer having the lowest degree of aggregation and the highest layer having the highest degree of aggregation and the intermediate layers having a successively higher/lower degree of aggregation. As shown, the resolution of data aggregation between the layers may depend on the number of layers of the octree 60a. A higher number of layers providing a finer resolution (and lower number of layers providing a coarser resolution), e.g., of the spatial and/or temporal position. The number of layers of the first octree may be determined on a desired resolution and/or based on a processing capability and/or a storage capability of the first processing device.

Now turning to Figure 13b, the second octree 60b may be created on a second edge device (or generally an a second device for data processing) or an operating device. Thence, the second octree may be located on the second edge device or the operating device. Now, the second octree may comprise a lower number of layers than the first octree. The number of layer of the second octree may also be based on a processing capability and/or a storage capability and/or a display capability of the second edge device and/or the operating device, respectively. Since the processing, storage and/or display capabilities of the first edge device on the one hand and the second edge device and/or the operating device on the other hand differ it may be necessary to provide octrees with different numbers of layers on the different devices. For example, layer L1' of the second octree 60b may correspond to layer L1 of the fist octree 60a, and layer L2' of the second octree 60b may correspond to layer L3 of the first octree 60a, and layer L3' of the second octree may correspond to layer L5 of the first octree 60a. In any case, other mappings between the layers may be chosen based on the desired resolution and/or capabilities of the first edge device and/or second edge device and operating device, respectively. For example, only a predetermined number of, e.g., equidistant layers of the first octree may be used for (creating) the second octree. Hence, a first octree comprising a first number of layers on a first edge device, and a second octree comprising a second number of layers on a second edge device and/or operating device may be created, wherein the second octree may comprise fewer layers than the first octree. Furthermore, one or more layers may thus be selected and transmitted from the first edge device to the second edge device and/or operating device. The second edge device and/or the operating device may thus load the, e.g., selected, layers of the first octree into the second octree. It should be understood that the layers and nodes of the layers may comprise the assigned operational data and/or aggregated data, as the case may be.

Thereby, the storage space (memory) is saved on the second edge device and/or operating device, respectively. Nonetheless, the (aggregated) data associated with the layers and nodes is still available, e.g., for further processing or for visualizing by the second edge device and/or the operating device, respectively.

The resolution and/or the number layers of the second octree 60b may be determined based on the number of pixels of a display of the operating device. Based on the number of pixels a number of layers can be determined for the second octree. For example, a maximum resolution of the octree may correspond to the number of pixels available on the display of the operating device. Additionally and/or alternatively, the number of layers of the second octree 60b may be determined based on a storage capability of the second edge device and/or the operating device. Hence, a sequence of visualizations (with different resolution levels) of the operational data dependent on the capabilities of the second edge device and/or the operating device may be provided based on the second octree.

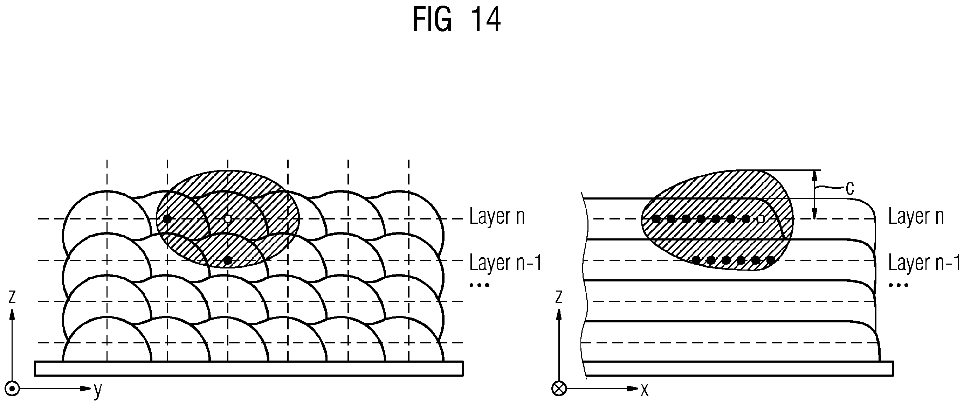

Figure 14 shows a defect in an object during an additive manufacturing process. The spatial relevancy of a defect correlation may be defined based on the dimensions of the weld bead during the welding process. These dimensions x, y, z may depend on the welding velocity along a toolpath, the substrate temperature, the heat input per unit length, and the material. Sectional views of a double-ellipsoid with current working point and affected data points are shown in Figure 14.

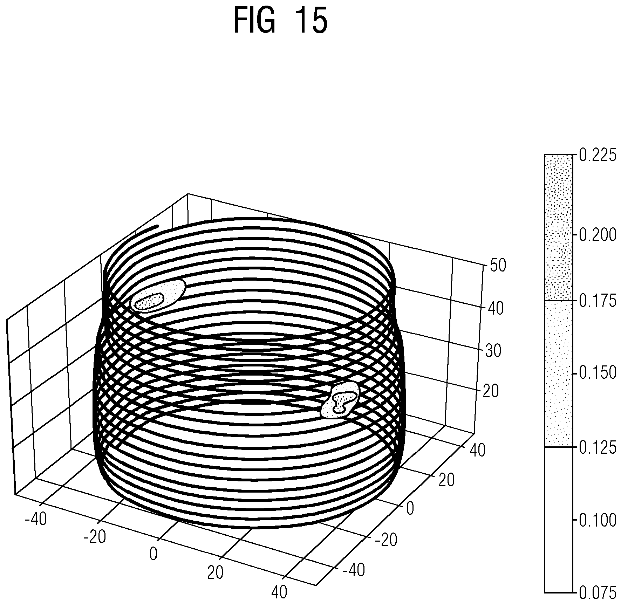

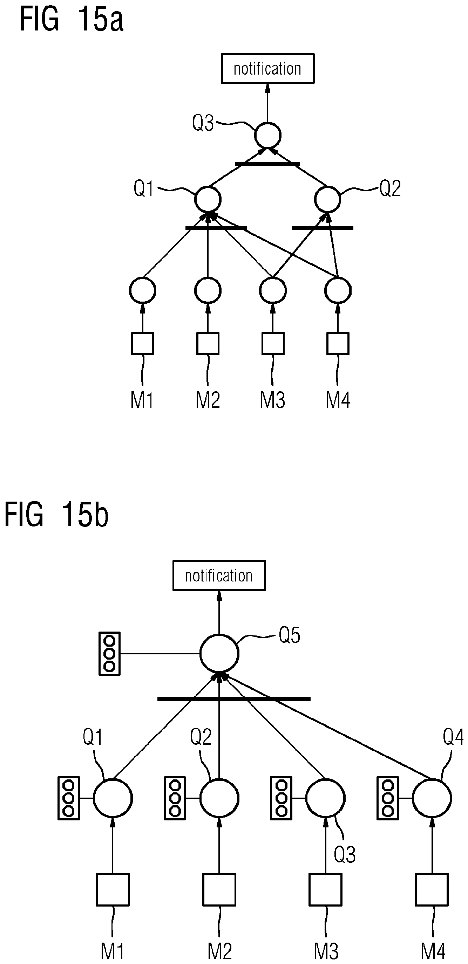

Figure 15 shows a visualization of defects. In Figure 15, an anomaly score is shown in logarithmic color scale along a toolpath. The areas where defects occurred possess considerably higher anomaly scores than the non-abnormal areas. In the areas above the defects, an increased anomaly score is apparent as the effects of the defects have propagated.

Defects may be detected by setting a threshold for an anomaly score. In Figure 15 detected defects are visualized depending on a chosen threshold. For example, a user set threshold may be used. Detected defects which are spatially correlated are colored in the same way. The expansion of each detected defect cluster may be monitored along the additive manufacturing process.

Figure 15a and 15b show the creation of quality indicators based on measurement data from different sensors or operational data in general. As shown, measurement data from different sensors M1, ..., M4 may be available, e.g., stored in a database. Now, as described herein, the measurement data may be aggregated for each sensor separately. However, it is also possible to aggregate and/or combine the measurement data of different sensors, e.g., in order to determine a quality indicator and/or an anomaly score, as the case may be. For example, as shown in Figure 15a, the measurement data of sensors M1, M2, M3 and M4 are combined to form a first quality indicator Q1. On the other hand, the measurement data of the sensors M3 and M4 may be combined in order to form a second quality indicator Q2. Hence, quality indicators may be determined based on the measurement data of different sensors. Furthermore, a plurality of quality indicators may be combined to form a (superordinate) quality indicator Q3. The oner or more quality indicators may be visualized on the display of the operating device. Additionally or alternatively, a notification may be issued in order to inform a user or operator about the quality indicator and or change of the quality indicator.

In Figure 15b, the quality indicators are illustrated by respective traffic lights. Thus, the quality indicators may take on discrete values. As shown in Figure 15b, each sensor M1, M2, M3, M4 provides measurement data, wherein for each sensor a quality indicator is determined based (solely) on the respective measurement data. The quality indicators Q1, Q2, Q3, Q4, Q5 may be combined to form a (superordinate) quality indicator Q5. One or more of the quality indicators Q1,..., Q5 may be visualized. Based on the quality indicator Q5 a notification may be issued in order to inform a user or operator about the quality indicator Q5 and or change of the quality indicator Q5.

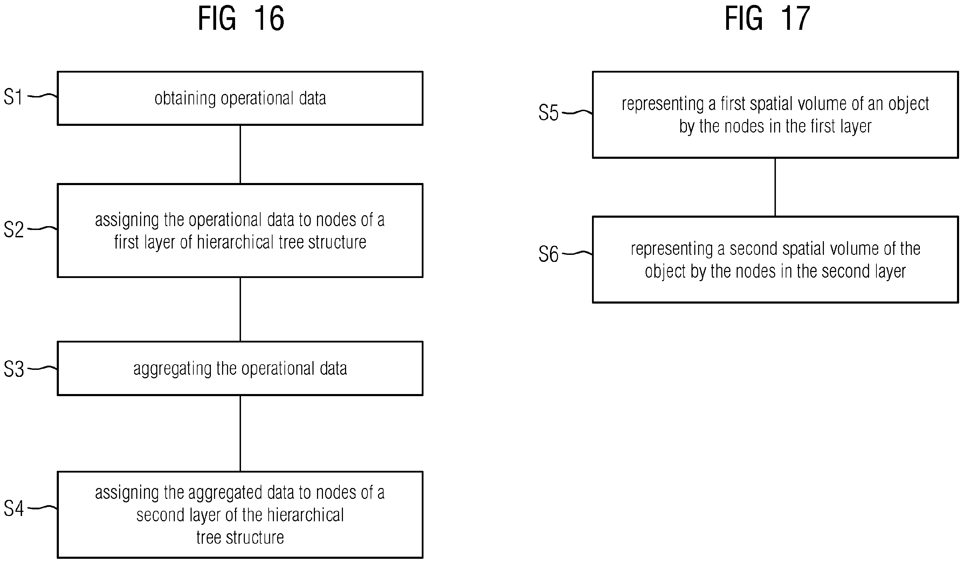

Figure 16 to 31 show exemplary method steps of an additive manufacturing process.

Turning to Figure 16, in a first step S1 operational data may be obtained. The operational data may comprise measurement data from one or more sensors. The operational data may also comprise spatial information, for example from the additive manufacturing machine. The spatial information may be used to build an octree of the object. Besides the machine context the spatial and/or temporal context may influence the current deposition process, resulting in spatio-temporal relations of the data, since some defects may propagate from one layer to the subsequent layers of the object. Thus, the operational data may comprise measurement data that has been enhanced or annotated, e.g., with time and/or spatial information.

For each path increment of the additive manufacturing process, an item with a spatial index based on the Cartesian position of a data point may added to an hierarchical tree structure, such as an octree. As payload, the measurement data, an anomaly score, a defect type, a defect identifier, a position of the preceding data point, and/or a timestamp may be stored. Thus, in a step S2, the operational data may be assigned to nodes of a first layer of the hierarchical tree structure. The operational data may serve as the basis of one or more visualization. In a step S3, the operational data is aggregated. For example, operational data of the nodes in the first layer is aggregated into aggregated data. In a step S4 the aggregated data is assigned to nodes of a second layer of the hierarchical tree structure. Therein, the second layer may be above the first layer in the hierarchical tree structure.

Turning to Figure 17, in a step S5 a first spatial volume of an object is represented by the nodes in the first layer and in a step S6 a second spatial volume of the object is represented by the nodes in the second layer. Therein, the second spatial volume may be larger than the first spatial volume.

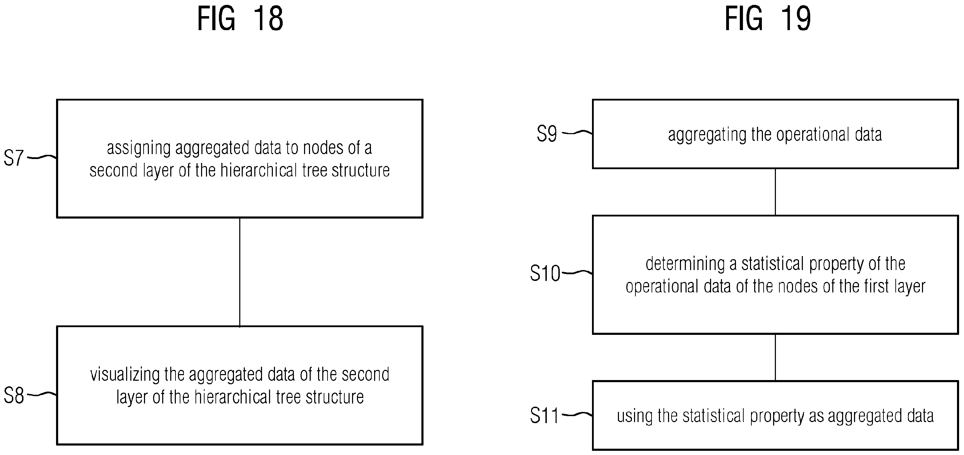

Turning to Figure 18, in a step S7 the aggregated data is assigned to nodes of a second layer of the hierarchical tree structure and in a step S8 the aggregated data of the second layer of the hierarchical tree structure is visualized. The visualization may be performed on a display of an operating device for controlling and/or monitoring the additive manufacturing process. Hence, the visualization may be presented to a user or operator of the additive manufacturing system/machine.

Turning to Figure 19, in a step S9 the operational data is aggregated. Therein, in a step S10, a statistical property of the operational data of the nodes of the first layer may be determined. In a step S11, the statistical property is used as aggregated data.

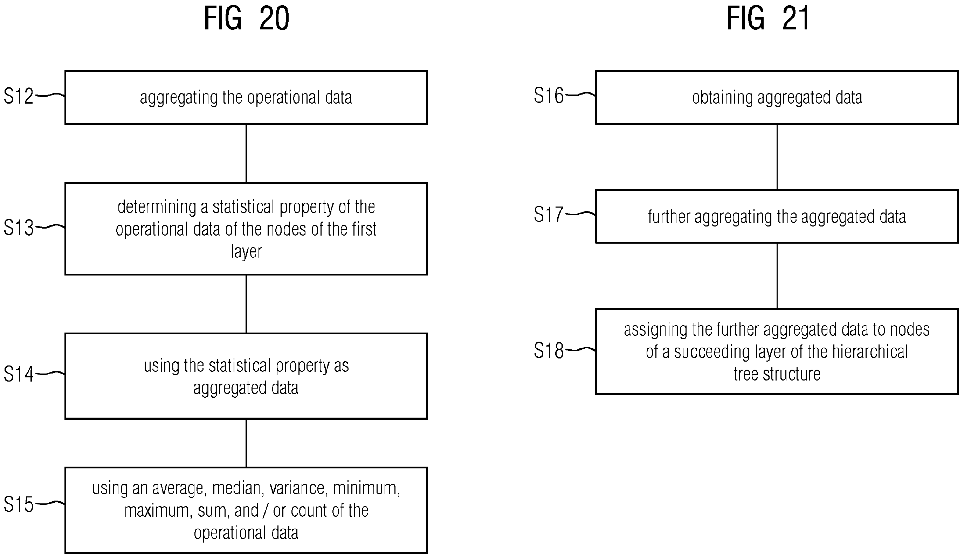

Turning to Figure 20, in a steps S12 to S14 the operational data is aggregated, a statistical property of the operational data of the nodes of the first layer is determined, and the statistical property is used as aggregated data. According to step S15 an average, median, variance, minimum, maximum, sum, and/or count of the operational data may be used as statistical property.

Turning to Figure 21, aggregated data may be obtained. The aggregated data may be assigned to nodes of an (first) intermediate layer of the hierarchical tree structure. In a step S17, the aggregated data is further aggregated. This further aggregation of the aggregated data may also be based on a statistical property, e.g., average, median, variance, minimum, maximum, sum, and/or count, of the aggregated data of the (first) intermediate layer. In a step S18, the further aggregated data is assigned to nodes of a succeeding layer, i.e., a second (intermediate) layer, of the hierarchical tree structure.

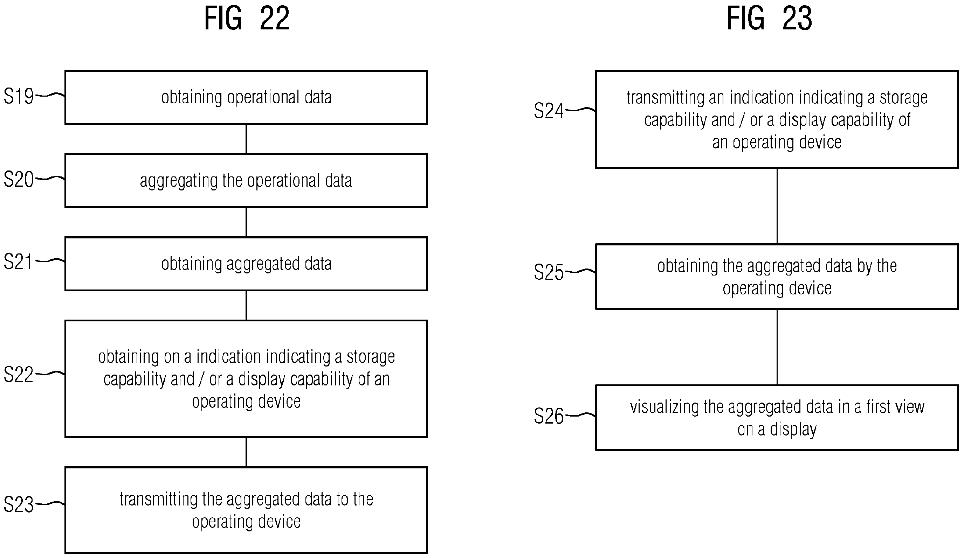

Turning to Figure 22, operational data may be obtained, e.g., by an edge device in a step S19. In a step S20, the operational data may be aggregated and as a result aggregated data may be obtained in a step S21. As before, further aggregation may be performed for all the intermediate layers of the hierarchical tree structure. In a step S22, an indication indicating a storage capability and/or a display capability of an operating device may be obtained, e.g., by the edge device.

In a step S23, the aggregated data may be transmitted to an operating device, e.g., comprising a memory for storing the aggregated data and/or a display for displaying the aggregated data. Based on the indication the edge device may determine a corresponding layer of the hierarchical tree structure. The layer comprising an amount of data or referring to an amount of the aggregated data that can be stored in a memory and/or displayed on a display of the operating device.

Turning to Figure 23, in a step S24, an indication indicating a storage capability and/or a display capability of an operating device may be transmitted, e.g., (from the operating device) to an edge device. In a step S25, the aggregated data may then be obtained by the operating device. In a step S26, the aggregated data may then be visualized in a first view on a display. It should be understood that the aggregated that may correspond to the aggregated data of and/or assigned to any of the intermediate layers of the hierarchical tree structure.

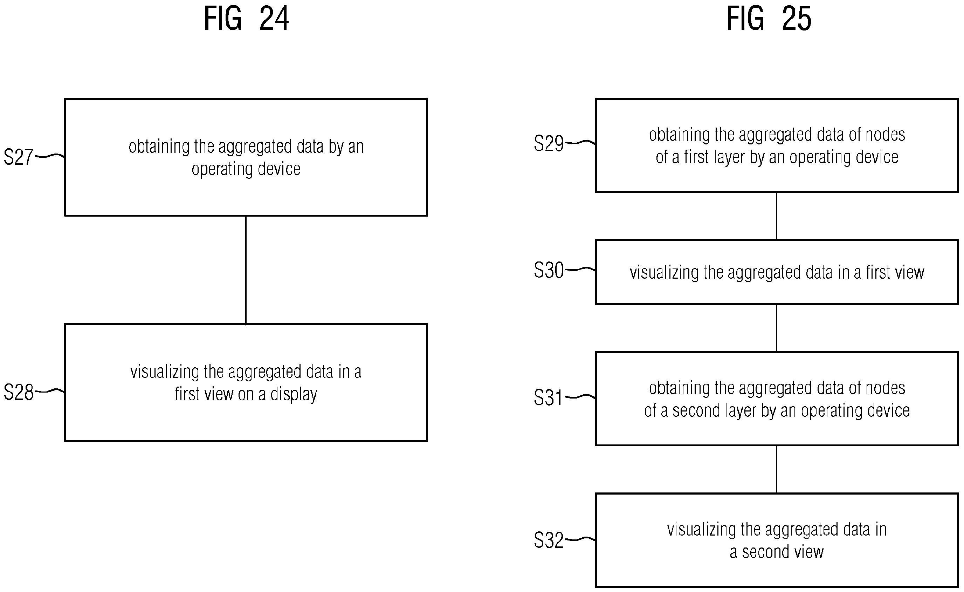

Turning to Figure 24, in a step S24 aggregated data is obtained by an operating device, e.g., from an edge device. The operating device may also comprise an edge device, which edge de device comprise and/or is operatively coupled to a display. in a step S28, the aggregated data may be visualized (in a first view) on a display.

Turning to Figure 25, in a step S29 the aggregated data of nodes of a first layer is obtained by an operating device. In a step S30, the aggregated data is visualized in a first view, e.g., of a display. In a step S31 the aggregated data of nodes of a second layer is obtained by an operating device and is visualized in a second view, e.g., on said display. Therein, a first indicator may be obtained by the edge device the first indicator indicating the first layer/the nodes of the first layer. Subsequently, a second indicator may be obtained by the edge device, the second indicator indicating the second layer/the nodes of the second layer. The visualization of the first view may then be replaced on the display by the visualization of the second view.

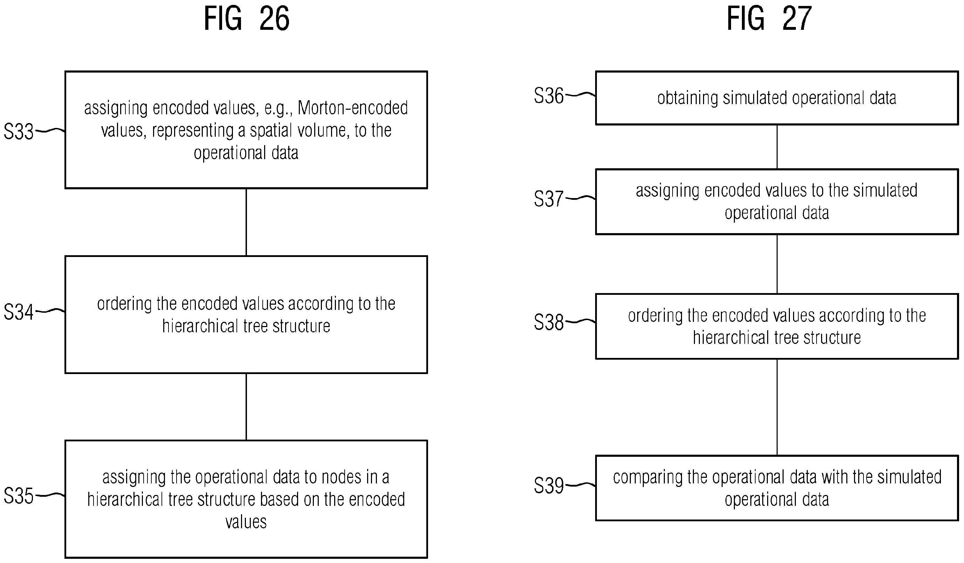

Turning to Figure 26, encoded values, e.g., Morton-encoded values, representing a spatial volume may be assigned to the operational data in a step S33. In a step S34 the encoded values may be ordered according to the hierarchical tree structure. In a step S35, the operational data may be assigned to (leaf) nodes in the hierarchical tree structure based on the encoded values.

Turning to Figure 27, a simulation of the additive manufacturing process may be performed. As a result, simulated operational data may be obtained in a step S36. In a step S37, encoded values, e.g., Morton-encoded values, may be assigned to the simulated operational data. In a step S38, the encoded values may be ordered according to the hierarchical tree structure and in a step S39 the simulated operational data may be compared to the (actual) operational data.

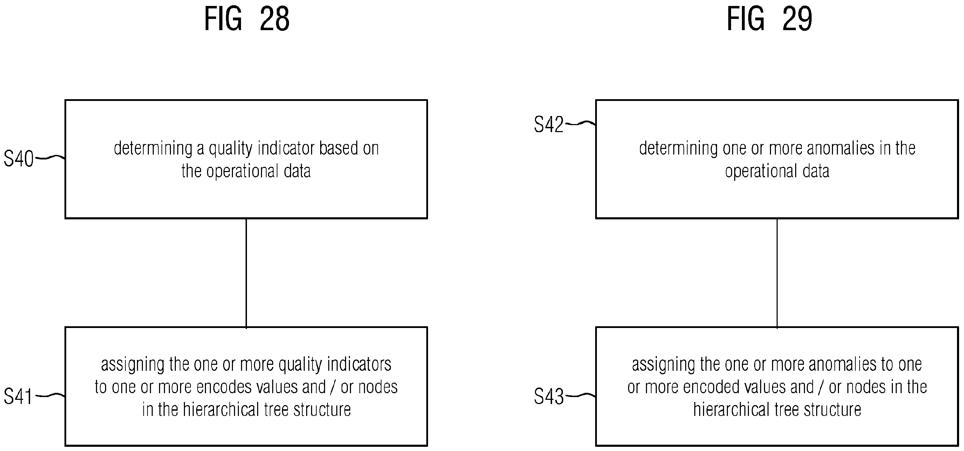

Turning to Figure 28, a quality indicator may be determined based on the operational data in a step S40. In a step S41, the one or more quality indicators may be assigned to one or more encodes values and/or nodes in the hierarchical tree structure.

Turning to Figure 29, one or more anomalies in the operational data may be determined in a step S42. To that end, an anomaly score may be determined. In a step 43 the one or more anomalies may be assigned to one or more encoded values and/or nodes in the hierarchical tree structure.

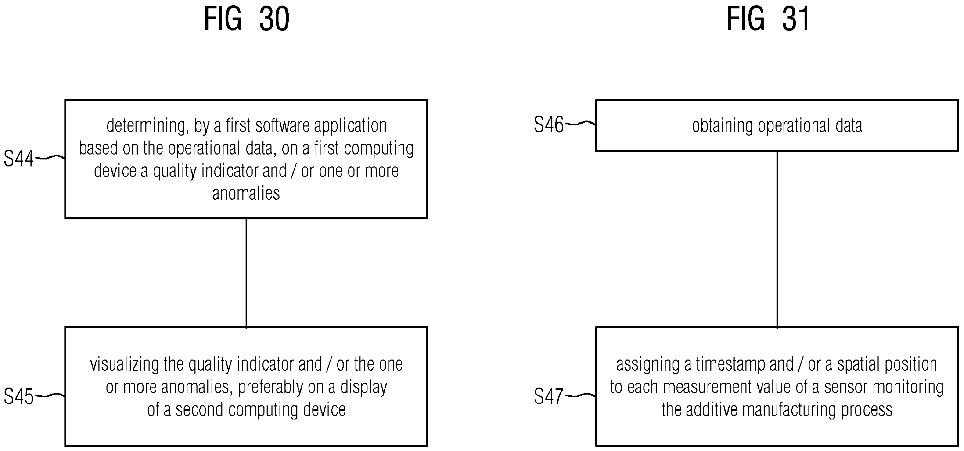

Turning to Figure 30, in a step S44 a first software application, e.g., on a first computing device, such as a fist edge device, may determine based on the operational data, a quality indicator and/or one or more anomalies. In a step S45 the quality indicator and/or the one or more anomalies may be visualized, preferably on a display of a second computing device, such as a second edge device.

Turning to Figure 31, operational data may be obtained in a step S46 and in a step S47 a timestamp and/or a spatial position may be assigned to each measurement value of a sensor monitoring the additive manufacturing process.

The proposed aspects enable the real time process monitoring and anomaly detection for an arbitrary number of sensors at low latency for multiple types of additive manufacturing system. The proposed aspects offer the possibility, to monitor the quality of the object during operation, i.e., in situ, and close to real-time. Timestamps and spatial information are managed, e.g., by a controller and/or an edge device. Thereby, the lag between each sensor timesteps is minimized. This enables a precise accordance of the measurement data to the actual process timestamp it was measured in. The different aspects enable a scalable architecture and allows for adding additional sensors. All data is highly synchronized and thus, a defect can be localized precisely. Connectors between the edge device(s) to each sensor (type) enable a quick plug-and-play solution.

Thus, a, e.g., web-based, distributed system for visualization, e.g., on a tablet, PC, Smartphone or other operating device is proposed that allows data filtering and/or aggregation for data visualization, as well as low latency without discarding original raw data. Furthermore, a temporary and/or spatial region of interest data aggregation is proposed with no need for subsequential alignment. Furthermore, the usage of octrees or stacked quadtrees, as a hierarchical tree structure, allows using direct energy deposition technologies (WAAM, LMD, FDM etc.) as well as bed-based (LB-PBF, EB-PBF, SLS, BJ etc.) technologies. Furthermore, the combination of time series databases and octrees via Morton code or other location code, is proposed in order to deal with high amount of data.

## Claims

1. A, preferably computer-implemented, method of assisting, operating, monitoring, and/or controlling an additive manufacturing process, the method comprising the steps of:
obtaining operational data (OD) captured during the additive manufacturing process,
assigning the operational data (OD) to nodes (63) in a first layer (L3) of a hierarchical tree structure (60),
aggregating the operational data (OD) of the nodes (63) in the first layer into aggregated data (AD), and
assigning the aggregated data (AD) to nodes (62) of a second layer (L2) of the hierarchical tree structure (60), wherein the second layer (62) is above the first layer (63) in the hierarchical tree structure (60).

2. The method according to the preceding claim,
wherein the nodes (63) in the first layer (L3) represent a first spatial volume of an object, e.g., to be manufactured, and the nodes (62) in the second layer (L2) represent a second spatial volume of the object, wherein the second spatial volume is larger than the first spatial volume.

3. The method according to any one of the preceding claims, visualizing the aggregated data (AD) of the second layer (L2) of the hierarchical tree (60) structure on a display (D1, D2) of an operating device for controlling and/or monitoring the additive manufacturing process, and/or
superimposing, on the display (D1, D2), a visualization of the data model of the object on the visualization of the aggregated data (AD), or vice versa.

4. The method according to any one of the preceding claims, the step of aggregating the operational data (OD) comprises determining a statistical property of the operational data (OD) of the nodes (63) of the first layer (L3) and using the statistical property as aggregated data (AD), i.e., the aggregated data (AD) is a statistical property of the operational data (OD) of the nodes (63) of the first layer (L3), in particular using an average, median, variance, minimum, maximum, sum, and/or count of the operational data (OD) associated with the nodes in the first layer (L3) as statistical property.

5. The method according to any one of the preceding claims, further aggregating the aggregated data (AD) of nodes in a particular layer into further aggregated data, and
assigning the further aggregated data to nodes of a succeeding layer of the hierarchical tree structure (60), wherein the succeeding layer is above the particular layer in the hierarchical tree structure (60).

6. The method according to any one of the preceding claims, transmitting, based on an indication indicating a storage capability and/or a display capability of an operating device, the aggregated data (AD) associated to the nodes of a layer of the hierarchical tree structure (60) to the operating device.

7. The method according to any one of the preceding claims, visualizing, based on an indication received from the operating device, the aggregated data (AD) of nodes of a first layer in a first view on a display, and/or
visualizing, based on a further indication received from the operating device, the aggregated data (AD) of nodes of a second layer in a second view on the display.

8. The method according to any one of the preceding claims, creating a first octree comprising a first number of layers on a first edge device, and
creating a second octree comprising a second number of layers on a second edge device and/or operating device, the second octree comprising fewer layers than the first octree.

9. The method according to any one of the preceding claims, transmitting and/or loading, e.g., selected, layers of the first octree into the second octree.

10. The method according to any one of the preceding claims, assigning encoded values, e.g., Morton-encoded values, representing a spatial volume, to the operational data, wherein the operational data comprise measurement data (40) and/or parameter data related to the additive manufacturing process, and
assigning the operational data (OD) to nodes in a hierarchical tree structure (60) based on the encoded values, and/or
ordering the encoded values according to the hierarchical tree structure (60), thereby associating the operational data (OD) to at least one node in a first instance of the hierarchical tree structure (60).

11. The method according to any one of the preceding claims, obtaining simulated operational data, wherein the simulated operational data comprise simulated measurement values and/or simulation parameter values related to the additive manufacturing process,
assigning encoded values, e.g., Morton-encoded values, representing a spatial volume, to the simulated operational data, storing the simulated operational data in a hierarchical tree structure based on the encoded values,
ordering the encoded values according to the hierarchical tree structure, thereby associating the simulated operational data to at least one node in a second instance of the hierarchical tree structure, and
comparing the operational data with the simulated operational data by visualizing identical layers of the first and second instance of the hierarchical tree structure on a display of an operating device.

12. The method according to any one of the preceding claims, determining a quality indicator based on the operational data,
assigning the one or more quality indicators to one or more encodes values and/or nodes in the hierarchical tree structure.

13. The method according to any one of the preceding claims, determining one or more anomalies in the operational data, e.g., based on an ellipsoid space of influence around a spatial volume, and
assigning the one or more anomalies to one or more encoded values and/or nodes in the hierarchical tree structure.

14. The method according to any one of the preceding claims, determining, by a first software application based on the operational data, on a first computing device a quality indicator and/or one or more anomalies.

15. The method according to any one of the preceding claims, obtaining operational data by assigning a timestamp and/or a spatial position to each measurement value of a sensor monitoring the additive manufacturing process.

16. A system (100), e.g., an additive manufacturing system comprising one or more edge devices (E1, E2) and/or an operating device, operative to perform the method steps of any one of the preceding claims.

17. A computer program comprising program code, that when executed performs the method steps of any one of the preceding claims.
